Europäisches Patentamt

European Patent Office

Office européen des brevets

(19)

(11) Publication number: **0 217 378**
**A1**

(12) ## EUROPEAN PATENT APPLICATION

(21) Application number: 86113503.6

(22) Date of filing: 01.10.86

(51) Int. Cl.⁴: **A01N 63/00** ,
//(A01N63/00,47:24,47:22)

(30) Priority: 01.10.85 US 782301

(43) Date of publication of application:
08.04.87 Bulletin 87/15

(84) Designated Contracting States:
AT BE CH DE ES FR GB GR IT LI NL

(71) Applicant: **UNIVERSITY OF FLORIDA**
**207 Tigert Hall**
**Gainesville Florida 32611(US)**

(72) Inventor: **Brown, Stephen M.**
**2125 Bella Casa**
**Davis California 95616(US)**
Inventor: **Nordmeyer, Dieter**
**Engerfeldstrasse 7**
**CH-4310 Rheinfelden(CH)**

(74) Representative: **Redies, Bernd, Dr. rer. nat. et**
**al**
**COHAUSZ & FLORACK Patentanwaltsbüro**
**Schumannstrasse 97 Postfach 14 01 47**
**D-4000 Düsseldorf 1(DE)**

(54) **Nematicidal compositions and method.**

(57) The present invention relates to certain novel nematicidal compositions and methods for controlling plant and crop damage due to a wide variety of nematodes; in particular it relates to a nematicidal composition adapted for application to the field to control nematodes comprising a nematicidally effective amount of a mixture of at least one carbamate or dithiocarbamate nematicide which is inert with respect to the bacterium, Pasteuria penetrans, and an amount of Pasteuria penetrans bacterium such that the degree of reduction in plant damage due to nematodes effected by the mixture is greater than the sum of the degrees of reduction in plant damage attributable to each of the at least one nematicide and bacterium, respectively, present in the mixture.

The present invention also relates a method of controlling nematodes comprising applying to or incorporating in nematode infested soil a nematicidally effective amount of the above-described mixture.

## NEMATICIDAL COMPOSITIONS AND METHOD

## BACKGROUND OF THE INVENTION

### Field of the Invention

The present invention relates to certain novel nematicidal compositions and methods of controlling nematodes.

### Prior Art

The bacterium, Pasteuria penetrans (Thorne) has been demonstrated to be a widespread parasite [Sayre and Starr, J. Nematol. Vol. 12, pp. 260-270 (1980)]. In its natural environment it tends to be in equilibrium with its nematode hosts [Swellengrebel, Proc. 3d Int. Cong. Microbiol. Baltimore: Waverly Press (1940). However, in agroecosystems the addition of the bacterium to the field can reduce galling of plant roots caused by root-knot nematodes [Stirling, Phytopathology, Vol. 74, pp. 55-60 (1984)] and increase crop yield - [Brown et al, Soil Biol. and Biochem, Vol. 17, pp. 483-486 (1985)]. Brown et al, supra, also suggested the possibility of using a combination of organisms for sustainable, long-term control of root-knot nematodes. Roy [Revue Nematol., Vol. 5, pp. 335-336 (1982)] demonstrated the synergistic suppression of the galling of tomato roots by Meloidogyne incognita (Kofoid & White) Chitwood with the nematophagus endoparasitic fungus, Catenaria anguillulae, and the nematicide, ethoprop.

It is an object of the present invention to provide novel nematicidal compositions and methods for controlling plant and crop damage due to a wide variety of nematodes.

## SUMMARY OF THE INVENTION

The above and other objects are realized by the present invention which provides a nematicidal composition adapted for application to the field to control nematodes comprising a nematicidally effective amount of a mixture of at least one carbamate or dithiocarbamate nematicide which is inert with respect to the bacterium Pasteuria penetrans, and an amount of Pasteuria penetrans bacterium such that the degree of reduction in plant damage due to nematodes effected by the mixture is greater than the sum of the degrees of reduction in plant damage attributable to each of the at least one nematicide and bacterium, respectively, present in the mixture.

The present invention also provides a method of controlling nematodes comprising applying to or incorporating in nematode infested soil a nematicidally effective amount of the above-described mixture.

The present invention further provides a nematicidal composition in kit form comprising separately package: a) at least one carbamate or dithiocarbamate nematicide which is inert with respect to the bacterium, Pasteuria penetrans, and b) Pasteuria penetrans bacterium, the amounts of the at least one nematode and Pasteuria penetrans bacterium being such that upon their (1) being admixed and applied to or incorporated into or (2) separately applied to or incorporated into soil infested with nematodes, the degree of reduction in plant damage due to the nematodes effected by the mixture is greater than the sum of the degrees of reduction in plant damage attributable to the amounts of each of the at least one nematicide and bacteria, respectively, applied to the soil.

## DETAILED DESCRIPTION OF THE INVENTION

The effect on the penetration by second-stage juveniles of M. javanica into tomato roots - (Lycopersicon esculentum Miller 'Rutgers') in the presence of P. penetrans and various carbamate or dithiocarbamate nematicides was investigated using a modified version of the penetration inhibition test [Bunt, Meded. Landbouwhogeschool Wageningen, Vol. 75-10, pp. 1-127 (1975)]. The six treatments were arranged in a completely randomized design with each treatment replicated ten times: (1) nematodes alone, (2) nematodes + bacteria, (3) nematodes + carbofuran, (4) nematodes + aldicarb, (5) nematodes + bacteria + carbofuran, and (6) nematodes + bacteria + aldicarb.

## EXAMPLE

Thirty cubic centimeters of quartz sand and 50 mg of inoculum [Stirling et al, Nematologica, Vol. 26, pp. 308-312 (1980)], the disclosure of which is incorporated herein by reference, of P. penetrans were added to 30 ml plastic cups in Treatments 2, 5 and 6. It had been determined in previous tests that this amount of inoculum reduced galling by approximately 50 percent. The same amount of dried, ground tomato roots without P. penetrans was added to the cups of the remaining treatments. Five milliliters of water were added to each cup and they were incubated for two days at 28° according to the method of Brown et al [Nematropica, Vol. 14, pp. 171-172 (1984)]. Carbofuran (Treatments 3 and 5) and aldicarb (Treatments 4 and 6) were added as technical material to the cups to give final concentrations of 1.5 and 0.25 ppm, rspectively. It had been determined in previous tests that these concentrations also reduced galling by approximately 50 percent. Six hours later 125 M. javanica juveniles in 0.5 ml water were injected into the cups. After 24 hours at 28°, one tomato seedling was planted in each cup. The cups were placed randomly on an incubator shelf at 28° with a cycle of 13 hours of light (260 Lux) and 11 hours of dark. After ten days, galls on the roots were counted, and the a priori contrasts of treatment effects:

$$[H_1: C = E_{total} - (E_{nematicide} + E_{bacterium}) > 0)$$

were tested by normal approximation according to the method of Mendenhall et al [Mathematical statistics with applications, 2nd ed. Duxbury Press, Boston (1981)]. The effects (E) are defined as the difference in proportions of galled plants in the treatment with nematodes along (Treatment 1) and that of the treatment of interest. For example,

$$E_{total} = P_1 - P_5, \text{ or } P_1 - P_6,$$

$$E_{nematicide} = P_1 - P_3 \text{ or } P_1 - P_4, \text{ and}$$

$$E_{bacterium} = P_1 - P_2, \text{ where } P_i \text{ is the true (unknown)}$$

proportion of galled plants that could result from the ith treatment (i = 1,2...,6). For aldicarb the contrast,

$$C = E_{total} - (E_{nematicide} + E_{bacterium}) \text{ is estimated by } \hat{C} = \hat{E}_{total} - (\hat{E}_{nematicide} + \hat{E}_{bacterium}) = \hat{P}_1 - \hat{P}_6 - [(\hat{P}_1 - \hat{P}_4) + (\hat{P}_1 - \hat{P}_2)] = (0.9) - [(0.3) + (0.2)] = 0.4.$$

The combined effect of P. penetrans and carbofuran or aldicarb exceeded the sum of the effect of the bacterium and the effect of each nematicide alone (P = 0.03 for each nematicide, Table 1).

## Table 1

## Proportions of tomato plants galled by
## Meloidogyne javanica

| Treatment | Proportions of galled plants* |
|---|:---:|
| 1. Nematodes alone | (1.0) |
| 2. Nematodes + Bacteria | (0.8) |
| 3. Nematodes + Carbofuran | (0.7) |
| 4. Nematodes + Aldicarb | (0.7) |
| 5. Nematodes + Bacteria + Carbofuran | (0.1) |
| 6. Nematodes + Bacteria + Aldicarb | (0.1) |

* Ten replicate plants.

These results confirm the absence of detrimental effects on P. penetrans by carbofuran and aldicarb at the concentrations used and demonstrate a synergistic reduction of root-galling by M. javanica with the nematicides and the bacterium. A possible explanation for this synergism is increased spore attachment by P. penetrans in the presence of nematicides. At low concentrations, carbamate nematicides affect the movement and orientation of nematodes toward host roots rather than kill the nematodes [Wright, In Plant Parasitic Nematodes, Vol. III, Eds. Zuckerman et al, Acad. Press. pp. 421-449 (1981)[. While not wishing to be bound by any theory as to the mechanism of the present invention, it is theorized that the nematicides operate to increase the movement of nematodes in soil and the probability of nematode contact with bacterial spores.

The compositions of the invention are preferably admixed with an agriculturally acceptable carrier for application to nematode-infested soil. Where the composition is packaged in kit-form as described above, the kit may also include the separately packaged carrier for admixture with the nematicide and the bacteria immediately prior to application. It will be understood by those skilled in the art that the kit-form of the composition of the invention possesses the advantage of preserving the stability of the components of the nematicidal composition until immediately prior to use.

Although the compositions of the invention are applicable for controlling a wide variety of nematodes, e.g., species of the genera: Heterodera, Globodera, Dityleuchus Protylenchus, Xiphinema, Longidorus, Anguina, Helicotylenchus, Hirschmanniella, Hopolainus, Radophobus , Rotylenchulus, Trichodorus, Tylenchulus, Aphenlenchoides, Criconemoides, Belonalaimus, Tylenchorlynchus (and related genera) etc., they are particularly effective against species of the genus Meloidogyne.

The nematicide employed in the composition of the invention may comprise any carbamate or dithiocarbamate nematicide which is inert with respect to Pasteuria penetrans, i.e., which is incapable of penetrating the bacteria spores and affecting the vitality thereof.

Suitable such nematicides include oxamyl -[methyl-N',N'-dimethyl-N-(methylcarbamoyl)-1-thiooxamimidate ], dazomet [tetrahydro-3-5-dimethyl-2H-thiadiazine-2-thione, methan-sodium -[sodium N-methyl-dithiocarbamate], aldicarb [2-methyl-2-(methylthio)propionaldehyde 0-(-(methylcarbamoyl)oxime)]. and carbofuran [2,3-dihydro-2,2-dimethyl-7-benzfuran yl methylcarbamate], aldoxycarb[2-methyl-2-(methylsulfonyl) propanal-0-[(methylamino)-carbonyl] oxim, bunema[potassium N-hydroxymethyl-N-methyl-dithiocarbamate]. The preferred nematicides are aldicarb and carbofuran.

The compositions of the invention, like most pesticidal agents, may be blended with the agriculturally acceptable surface-active agents and carriers normally employed for facilitating the dispersion of active ingredients, recognizing the accepted fact that the formulation and mode of application of a nematicidal compound may effect the activity of the material. The present nematicidal compositions may be applied, for example, as sprays, dusts, or granules to the area where pest control is desired, the type of application varying of course with the pest and the environment. Thus, the nematicidal compositions of this invention may be formulated as granules of large particle size, as powdery dusts, as wettable powders, as emulsifiable concentrates, as solutions, and the like.

Granules may comprise porous or nonporous particles, such as attapulgite clay or sand, for example, which serve as carriers for said nematicidal compounds. The granule particles are relatively large, a diameter of about 400-2500 microns typically. The particles are either impregnated with the nematicidal compound from solution or coated with the compound, adhesive sometimes being employed.

Dusts are admixtures of said nematicidal compounds with finely divided solids such as talc, attapulgite clay, kieselguhr, pyrophyllite, chalk, diatomaceous earths, calcium phosphates, calcium and magnesium, carbonates, sulfur, flours, and other organic and inorganic solids which act as carriers for the nematicide. These finely divided solids have an average particle size of less than about 50 microns.

The nematicidal compounds of the present invention may be made into liquid concentrates by dissolution or emulsification in suitable liquids and into solid concentrates by admixture with talc, clays, and other known solid carriers used in the pesticide art. The concentrates are compositions containing a nematicidally effective amount of the nematicidal compound and inert material, which includes surface-active dispersing, emulsifying and wetting agents. The concentrates are diluted with water or other liquids for practical application as sprays, or with additional solid carrier for use as dusts. Typical carriers for solid concentrates (also called wettable powders) include fuller's earth, clays, silicas, and other highly absorbent, readily wetted inorganic diluents.

Useful liquid concentrates include the emulsifiable concentrates, which are homogeneous liquid or paste compositions readily dispersed in water or other liquid carriers. They may consist entirely of the nematicidal compositions with a liquid or solid emulsifying agent, or they may also contain a liquid carrier such as xylene, heavy aromatic naphthas, isophorone and other relatively non-volatile organic solvents. For application, these concentrates are dispersed in water or other liquid carriers and normally applied as sprays to areas to be treated.

Typical surface-active wetting, dispersing and emulsifying agents used in pesticidal formulations include, for example, the alkyl and alkylaryl sulfonates and sulfates and their sodium salts: alkylamide sulfonates, including fatty methyl taurides; alkylaryl polyether alcohols, sulfated higher alcohols, polyvinyl alcohols, polyethylene oxides; sulfonated animal and vegetable oils; sulfonated petroleum oils; fatty acid esters of polyhydric alcohols and the ethylene oxide addition productsd of such esters; and the addition products of long-chain mercaptans and ethylene oxide. Many other types of useful surface-active agent, when used, normally comprises about 1-15% by weight of the nematicidal composition.

Many variations of spraying and dusting compositions known in the art may be used by substituting said nematicidal compositions of this invention into compositions known or apparent to the art.

The nematicidal compositions of this invention may be formulated with other active ingredients, including insecticides, other nematicides, acaricides, fungicides, plant growth regulators, fertilizers, etc. In using the compositions to control nematodes, it is only necessary that a nematicidally effective amount of the nematicidal compositions be applied to the locus where control is desired, generally a soil locus where agricultural crops are grown. When applied to soil, it is advantageous to mix or incorporate the nematicidal compound into the soil. Liquid nematicidal compositions may be injected into the soil as fumigants or sprayed on the surface. Solid compositions may be applied by broadcasting or in bands.

A unique advantage associated with the compositions and method of the present invention is that it enables effective control of nematodes, i.e., reduction in plant or crop damage, e.g., root-galling with reduced application rates of both the nematicide and the organism (bacterium) due to the synergistic nematicidal effect described above. Thus, the present invention substantially reduces the risk of hazard to the environment by enabling the application of lesser amounts of nematicide and bacterium to the soil while achieving an increased nematicidal effect.

It will also be understood that application or incorporation into soil of the compositions of the invention includes application of the compositions to plant or crop seeds or seedlings by dry or wet seed dressing, seed pelleting or by gel encapsulation of the seeds or seedlings.

The amounts of the composition of the present invention to be incorporated in or added to the soil are equivalent to those conventionally used when employing the nematicides alone. Those skilled in the art are well aware of the amounts of carbamate,dithiocarbamate to be applied to soils and/or seeds or plantings to control nematodes. The synergistic effect of the bacteria in the composition enhances the diffusion and, hence, the killing power of the nematicide over that in the case where the nematicide alone is employed.

The synergistic effect of the added bacteria also enables a reduction in the amount of nematicide conventionally employed since the combined bacteria and nematicide produces the same killing effect as a greater amount of the nematicide alone.

Generally, the compositions of the invention are applied to or incorporated in the soil such that the concentration of the nematicide therein is in the range of from about 0.5 to 4 kg/hectare, preferably from about 1 to about 3 kg/hectare.

The composition is formulated such that the weight ratio of bacteria to nematicide whether admixed prior to application or separately applied to the soil is in the range of from about 0.1:1 to about 10:1, preferably about 1:1 based on the dry weight of the bacterial spores and nematicide, respectively.

**Claims**

1. A nematicidal composition adapted for application to the field to control nematodes comprising a nematicidally effective amount of a mixture of at least one carbamate or dithiocarbamate nematicide which is inert with respect to the bacterium, Pasteuria penetrans, and an amount of Pasteuria penetransbaceria such that the degree of control of nematodes effected by the mixture is greater than the sum of the degrees of control of nematodes attributable to each of said at least one nematicide and bacteria, respectively, present in said mixture.

2. A nematicidal composition comprising a composition of claim 1 and an agriculturally acceptable carrier.

3. A nematicidal composition of claim 1 particularly adapted for application to the field to reduce root-galling by the nematode species of the genus Meloidogyne.

4. A nematicidal composition of claim 1 wherein said nematicide is carbofuran or aldicarb.

5. A nematicidal composition of claim 1 wherein the weight ratio of bacteria to nematicide is in the range of from about 0.1:1 to about 10:1.

6. A nematicidal composition of claim 1 wherein said weight ratio of bacteria to nematicide is about 1:1.

7. A nematicidal composition in kit-form comprising separately packaged: a) at least one carbamate or dithiocarbamate nematicide which is inert with respect to the bacterium, Pasteuria penetrans, and b) Pasteuria penetrans being such that upon their (1) being admixed and applied to or incorporated or (2) separately applied to or incorporated into soil infested with nematodes, the degree of control of nematodes effected by the mixture is greater than the sum of the degrees of control of nematodes attributable to the amounts of ech of said at least one nematicide and bacteria, respectively applied to said soil.

8. A nematicidal composition in kit-form comprising the composition of claim 7 and a separately packaged agriculturally acceptable carrier for the mixture of said a) and b).

9. A method of controlling nematodes comprising applying to or incorporating into nematode-infested soils (1) a nematicidally effective amount of the composition of claim 1 or (2) separately applying or incorporating into said nematode infested soil nematicidally effective amounts of said at least one nematicide and said bacterium, Pasteuria penetrans, of claim 1.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X,P | REVUE DE NEMATOLOGIE, vol. 8, no. 3, December 1985, pages 285-286, ORSTOM, Paris, FR; S.M.BROWN et al.: "Synergistic reduction in root galling by meloidogyne javanica with pasteuria penetrans and nematicides" <br><br> ----- | 1-9 | A 01 N 63/00 //<br>(A 01 N 63/00<br>A 01 N 47:24<br>A 01 N 47:22 ) |

|  |
|---|
| TECHNICAL FIELDS SEARCHED (Int. Cl.4) |
| A 01 N |

The present search report has been drawn up for all claims

| Place of search | Date of completion of the search | Examiner |
|---|---|---|
| THE HAGUE | 16-12-1986 | DECORTE D. |